# EUROPEAN PATENT APPLICATION

(11) **EP 4 708 557 A1**
(43) Date of publication of application: **11.03.2026**
(21) Application number: 24832194.5
(22) Date of filing: 16.04.2024
(51) Int. Cl.: H01M 50/655, H01M 50/664, H01M 50/627, H01M 50/682, H01M 50/105, H01M 10/058

(54) **POUCH CELL FOR SECONDARY BATTERY AND MANUFACTURING METHOD THEREOF**

(30) Priority: 28.06.2023 KR 20230083458
(71) Applicant: LG Energy Solution, Ltd., Seoul 07335 (KR)
(72) Inventor: PARK, Eun Suk, Daejeon 34122 (KR); HWANG, Ji Young, Daejeon 34122 (KR); LEE, Yu Jin, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Plasseraud IP
(86) International application number: PCT/KR2024/005092
(87) International publication number: WO 2025/005409

(57) **Abstract**

A pouch cell manufacturing method of the present disclosure prevents the sealing quality of a pouch from being deteriorated by an electrolyte solution, by reducing the amount of the electrolyte solution staining the sealing portion of the pouch, and a pouch cell in which gas inside the pouch can be efficiently discharged to the outside of the pouch is provided. The pouch cell of the present disclosure includes: an electrode assembly; a pouch within which the electrode assembly is accommodated; and a gas discharge pipe that is disposed such that the gas discharge pipe extends from the inside of the pouch to the outside, in which gas inside the pouch can be transmitted through the gas discharge pipe and discharged to the outside of the pouch.

## Description

### TECHNICAL FIELD

### CROSS-REFERENCE TO RELATED APPLICATIONS

This application is based on and claims priority from Korean Patent Application No. 10-2023-0083458, filed on June 28, 2023 with the Korean Intellectual Property Office, the disclosure of which is incorporated herein in its entirety by reference.

### TECHNICAL FIELD

The present disclosure relates to a pouch cell for a secondary battery capable of performing charging and discharging and a manufacturing method of the same.

### BACKGROUND ART

In recent years, due to the depletion of fossil fuels, the price of energy sources has risen, and an interest in environmental pollution has been boosted. Thus, the demand for eco-friendly alternative energy sources is becoming an indispensable factor for the future life. Accordingly, research on various power production techniques such as solar power, wind power, and tidal power is continuing, which also leads to great interest in power storage devices such as batteries for more efficiently using the electric energy produced in this way.

Furthermore, as the technology development and demand for electronic mobile devices and electric vehicles which use batteries increase, the demand for batteries as energy sources is rapidly increasing. Accordingly, studies have been conducted on batteries that can meet various needs.

Batteries storing electrical energy may be generally divided into primary batteries and secondary batteries. The primary battery is a disposable and consumable battery whereas the secondary battery is a rechargeable battery manufactured by using materials that allow oxidation and reduction processes to be repeated between current and substances. That is, when a reduction reaction is performed on the materials by current, power is charged, and when an oxidation reaction is performed on the materials, power is discharged. As such charging-discharging is repeatedly performed, electricity is generated.

Secondary batteries can be classified according to their shapes, for example, into cylindrical cells, pouch cells and prismatic cells. Among them, in manufacturing the pouch cell, an electrode assembly in the form of a stack of, for example, a cathode, an anode and a separator may be accommodated inside a pouch, and then the outer portion of the pouch may be sealed.

### DISCLOSURE OF THE INVENTION

### TECHNICAL PROBLEM

The present disclosure provides a pouch cell manufacturing method that can prevent the sealing quality of a pouch from being deteriorated by an electrolyte solution, by reducing the amount of the electrolyte solution staining the sealing portion of the pouch, and a pouch cell in which gas inside the pouch can be efficiently discharged to the outside of the pouch.

### TECHNICAL SOLUTION

The pouch cell according to the present disclosure includes: an electrode assembly; a pouch within which the electrode assembly is accommodated; and a gas discharge pipe that is disposed such that the gas discharge pipe extends from the inside of the pouch to the outside, in which gas inside the pouch can be transmitted through the gas discharge pipe and discharged to the outside of the pouch.

The gas discharge pipe may include: an inner layer and an outer layer which are heat sealable; and a transmission layer arranged between the inner layer and the outer layer, the transmission layer having a higher gas permeability than both of the inner layer and the outer layer.

The inner layer and the outer layer may contain a polyolefin-based resin, and the transmission layer may contain polytetrafluoroethylene (PTFE).

The gas discharge pipe may further include a sealing portion that protrudes to the outside of the pouch, and has inner layers sealed by sealing.

The gas discharge pipe may further include a passage portion that extends from the sealing portion to the inside of the pouch, and forms a space communicating with the inside of the pouch, through which gas flows out of the pouch.

An outer layer of the passage portion may be sealed with the pouch by sealing.

The pouch cell may further include: an electrode lead electrically connected to the electrode assembly and extending to the outside of the pouch, in which the gas discharge pipe may be disposed in a state where an interval is present between the gas discharge pipe and the electrode lead.

The pouch may include: a cup portion having a space therein where the electrode assembly is disposed; and a terrace portion arranged on an edge of the cup portion and sealed, in which the gas discharge pipe may be disposed while being inserted in the terrace portion.

The gas discharge pipe may include: a first gas discharge pipe disposed at one end in a longitudinal direction of the pouch; and a second gas discharge pipe disposed at the other end in the longitudinal direction of the pouch.

The first gas discharge pipe may be eccentrically disposed on one side in a width-wise direction of the pouch, and the second gas discharge pipe may be eccentrically disposed on the other side in the width-wise direction of the pouch.

A pouch cell manufacturing method according to the present disclosure may include the steps of: (S1) arranging a gas discharge pipe on an edge of a pouch within which an electrode assembly is accommodated; (S2) inserting an unsealed pipe configured to prevent sealing of the gas discharge pipe, into the gas discharge pipe; (S3) sealing the edge of the pouch; and (S4) injecting an electrolyte solution into the pouch through the gas discharge pipe.

The gas discharge pipe may include: a first gas discharge pipe disposed at one end in a longitudinal direction of the pouch; and a second gas discharge pipe disposed at the other end in the longitudinal direction of the pouch, in which in the step (S4), the electrolyte solution may be injected into the pouch through the first gas discharge pipe, and gas inside the pouch may be removed through the second gas discharge pipe.

A pouch cell manufacturing method according to the present disclosure may include the steps of: (S1') coupling an unsealed pipe and a gas discharge pipe such that an outer peripheral surface of the unsealed pipe faces an inner peripheral surface of the gas discharge pipe; (S2') arranging the gas discharge pipe coupled with the unsealed pipe, on an edge of a pouch within which an electrode assembly is accommodated; (S3') sealing the edge of the pouch; and (S4') injecting an electrolyte solution into the pouch through the unsealed pipe.

The pouch cell manufacturing method may further include the steps of: (S5) removing the unsealed pipe after the electrolyte solution is injected into the pouch; and (S6) sealing one end of the gas discharge pipe.

### ADVANTAGEOUS EFFECTS

According to an embodiment of the present disclosure, the amount of the electrolyte solution staining the sealing portion is reduced during the sealing of the pouch in the pouch cell manufacturing process, thereby improving the sealing quality of the pouch.

Therefore, the sealing property of the pouch is improved, thereby improving the stability of the pouch cell.

Also, the gas inside the pouch, which is generated during a charging or discharging process of the pouch cell, can be efficiently discharged to the outside.

Therefore, the occurrence of a pouch venting phenomenon, which is caused by gas inside the pouch, is delayed or prevented, so that the safety of the pouch cell can be improved.

Also, even if venting occurs by the pressure due to the gas inside the pouch, the venting can be induced through the gas discharge pipe.

Accordingly, the venting can be predicted, making it easy to manage the pouch cell or a battery module.

The effects according to the present disclosure are not limited to the contents exemplified above, and other various effects are included in the present specification.

### BRIEF DESCRIPTION OF THE DRAWINGS

FIG. 1 is a perspective view schematically illustrating a pouch cell according to a first embodiment of the present disclosure.
FIG. 2 is a plan view schematically illustrating the pouch cell according to the first embodiment of the present disclosure.
FIG. 3 is a cross-sectional view schematically illustrating a cross-section taken along line A-A' of FIG. 1.
FIG.4 is a perspective view schematically illustrating a pouch cell according to a second embodiment of the present disclosure.
FIG.5 is a plan view schematically illustrating the pouch cell according to the second embodiment of the present disclosure.
FIG. 6 is a flowchart schematically illustrating a pouch cell manufacturing method according to a third embodiment of the present disclosure.
FIG. 7 is a flowchart schematically illustrating a pouch cell manufacturing method according to a fourth embodiment of the present disclosure.
FIG. 8 is a perspective view schematically illustrating a state where an unsealed pipe and a gas discharge pipe are coupled in the pouch cell manufacturing method according to the fourth embodiment of the present disclosure.
FIG. 9 is a perspective view schematically illustrating a state where the gas discharge pipe coupled with the unsealed pipe is inserted into a pouch in the pouch cell manufacturing method according to the fourth embodiment of the present disclosure.

Skilled artisans will appreciate that elements in the drawings are illustrated for simplicity and clarity and have not necessarily been drawn to scale. For example, the dimensions of some of the elements in the figures may be exaggerated relative to other elements to help to improve understanding of various embodiments.

### MODE FOR CARRYING OUT THE INVENTION

Hereinafter, embodiments of the present disclosure will be described in detail with reference to the accompanying drawings so that a person with ordinary skill in the technical field to which the present disclosure pertains can easily implement the present disclosure. However, the present disclosure may be implemented in various different forms, and is not limited by or limited to the following embodiments.

In order to clearly explain the present disclosure, detailed descriptions on parts unrelated to the description or related known technologies that may unnecessarily obscure the gist of the present disclosure are omitted. In the present specification, in adding reference numerals to components of each drawing, identical or similar components are given the same or similar reference numerals through the entire specification.

Also, terms or words used in the present specification and claims should not be limitedly construed as usual or dictionary meanings, and should be interpreted as meanings and concepts consistent with the technical idea of the present disclosure on the basis of the principle that the inventor can appropriately define the concept of the term in order to explain his/her own invention in the best way.

A pouch-type battery has advantages such as good space efficiency, high energy density, and various possible battery designs because the internal space is filled with the battery (an electrolyte solution) and the manufactured battery is thin.

In the process of manufacturing a pouch cell, an electrolyte solution for impregnation of an electrode assembly accommodated within a pouch may be injected into the pouch, and the pouch may be sealed after the gas generated inside the pouch is removed. Here, the surface of the pouch to be sealed may be stained with the electrolyte solution, which may cause a problem with poor sealing quality.

Therefore, in this state, in order to improve the sealing quality of the pouch, there is a need for a pouch cell manufacturing method in which the electrolyte solution is injected into the pouch such that the pouch is not stained with the electrolyte solution.

Also, the pressure of the pouch cell may be increased due to internal gas generated through repetition of charging and discharging, and the sealing of the sealed portion may be damaged due to the increased pressure in some cases. This decrease in sealing property of the sealed portion leads to a problem such as causing a venting phenomenon in which the pouch is forced open by the pressure.

Therefore, the pouch cell in which the venting phenomenon has occurred cannot function as a secondary battery. Thus, in this state, in order to prevent or delay the occurrence of the venting phenomenon and forced opening of the pouch, the present disclosure provides a pouch cell that includes a configuration where the gas inside a pouch can be discharged to the outside of the pouch (e.g., the ambient environment).

### First embodiment

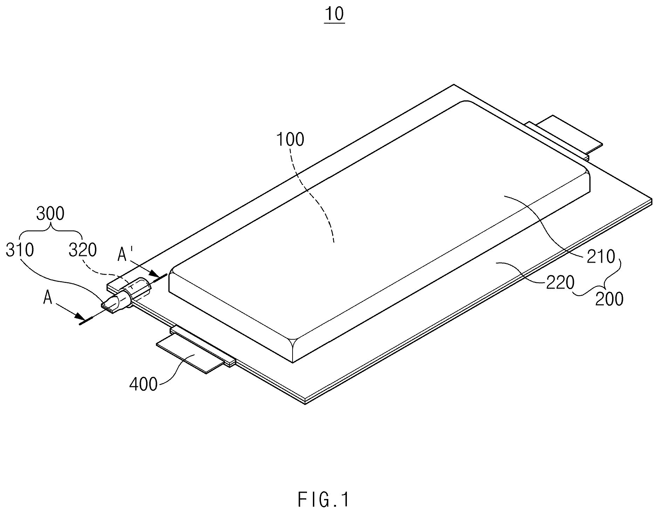

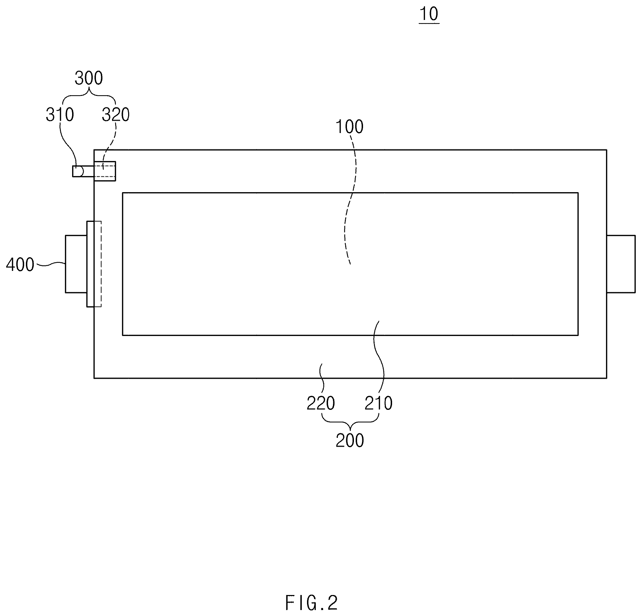

FIG. 1 is a perspective view schematically illustrating a pouch cell 10 according to a first embodiment of the present disclosure, and FIG. 2 is a plan view schematically illustrating the pouch cell 10 according to the first embodiment of the present disclosure, which is viewed from above.

The pouch cell 10 described in the present disclosure may mean a secondary battery capable of performing charging and discharging. For example, the pouch cell 10 may referred to as a secondary battery (rechargeable battery) in which an electrode assembly 100 including an anode, a cathode and a separator is disposed inside a pouch 200, and the pouch 200 is shaped and dimensioned to surround and enclose or envelope the electrode assembly 100. Alternatively, the pouch cell 10 may be referred to as a secondary battery in which the electrode assembly 100 including the anode, the cathode and the separator are accommodated together with an electrolyte solution inside the pouch 200.

The pouch 200 may include a cup portion 210 and a terrace portion 220. Since a space where the electrode assembly 100 is to be placed is provided in the cup portion 210, the electrode assembly 100 may be disposed in the cup portion 210 of the pouch 200. Also, the terrace portion 220 may be arranged on the edge of the cup portion 210 and may be sealed by sealing. Here, the sealing may be referred to as a process of sealing the pouch 200 by heat and pressure.

The electrode assembly 100 may have a stacked form of an anode, a cathode and a separator, or a wound jelly-roll form, and the pouch 200 may accommodate the electrode assembly 100. For example, the electrode assembly 100 and the electrolyte solution may be accommodated inside the molded cup portion 210 of the pouch 200.

Referring to FIG. 1, an electrode lead 400 may be electrically connected to the electrode assembly 100 and may be disposed to protrude to the outside of the pouch 200. The pouch cell 10 may provide electrical energy to the outside by the electrode lead 400 protruding to the outside of the pouch 200. Therefore, the electrode lead 400 may be a conductor.

A lead film may cover the electrode lead 400 such that the pouch 200 and the electrode lead 400 are insulated from each other. For example, the lead films may be disposed on both sides of the electrode lead 400 to cover the electrode lead 400. The lead films may be configured as a pair and disposed on both sides of the electrode lead 400, respectively.

Meanwhile, the lead film may include an insulating material in order to insulate the pouch 200 from the electrode lead 400. The electrode lead 400 may have a substantially rectangular parallelepiped shape, but is not necessarily limited thereto.

As charging and discharging are repeated in the pouch cell 10, gas may be generated, thereby increasing the pressure inside the pouch 200. When the pressure inside the pouch 200 is excessively increased, for example, a venting phenomenon in which the pouch is forced open may occur, thereby causing the pouch cell 10 to lose its function.

According to an embodiment, the electrolyte solution may be accommodated together with the electrode assembly 100 inside the pouch 200 of the pouch cell 10. Here, inside the pouch 200 of the pouch cell 10, residual moisture of the electrolyte solution or moisture penetrating from the outside may react with the lithium salt to generate HF (hydrogen fluoride), and gases such as carbon dioxide, carbon monoxide, ethylene, and methane may be generated due to decomposition, etc. of the electrolyte solution. Also, hydrogen and HF may be additionally generated depending on the cathode material included in the electrode assembly 100 of the pouch cell 10, and thus in the process of charging and discharging, overheating may occur due to overcharging and internal short circuit. Accordingly, a large amount of gas may be generated inside the pouch 200. Due to the generated gas, the pressure inside the pouch may be increased. The increased pressure may cause a swelling (expansion) phenomenon in which the pouch 200 swells (expands), or a venting phenomenon in which a part of the pouch 200 is ruptured.

In this regard, the pouch cell 10 according to the first embodiment of the present disclosure may include a gas discharge pipe 300 as an example of a configuration for efficiently discharging the gas accumulated in the pouch 200 to the outside of the pouch 200.

Referring to FIGS. 1 and 2, the gas discharge pipe 300 of the pouch cell 10 may be disposed such that the gas discharge pipe 300 extends from the inside of the pouch 200 to the outside. Here, the gas discharge pipe 300 may be fixed while being inserted in the pouch 200. For example, in the pouch cell 10, a pair of pouches 200 facing each other may be coupled through sealing, and the gas discharge pipe 300 may be disposed between sealing portions of the pouches 200 which face each other. According to an embodiment, the gas discharge pipe 300 may be disposed while being inserted in the terrace portion 220 of the pouch 200.

Meanwhile, the gas inside the pouch 200 may be transmitted through the surface of the gas discharge pipe 300 and move to the outside. For example, the gas collected in the cup portion 210 of the pouch 200 may be diffused to the inside of the gas discharge pipe 300, and may be transmitted through the surface of the gas discharge pipe 300, and may be discharged to the outside of the pouch cell 10.

The pouch cell 10 according to the first embodiment of the present disclosure includes the gas discharge pipe 300, so that the gas generated inside the pouch 200 due to repetition of charging and discharging, can be efficiently discharged to the outside of the pouch 200.

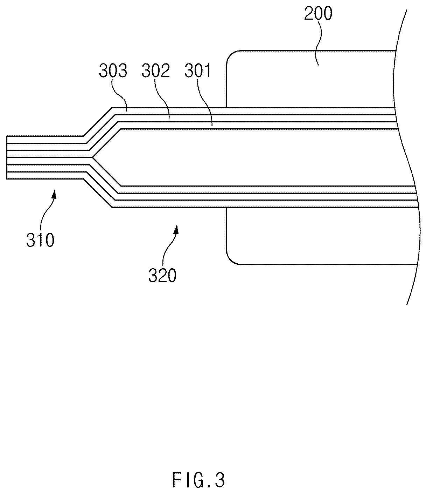

FIG. 3 is a cross-sectional view schematically illustrating a cross-section taken along line A-A' of FIG. 1.

As an example of a configuration through which gas can be efficiently transmitted, the gas discharge pipe 300 of the pouch cell 10 according to the first embodiment of the present disclosure may be composed of a plurality of layers. Specifically, the gas discharge pipe 300 may include an inner layer 301, a transmission layer 302, and an outer layer 303.

The inner layer 301 and the outer layer 303 may have sealing property based on heat or sealing property based on heat and pressure. As an example, the inner layer 301 and the outer layer 303 may include the same material as the innermost layer of the pouch 200 which is sealed by heat and pressure. Also, the inner layer 301 and the outer layer 303 may be partially melted by heat and have adhesiveness. Therefore, in addition to the sealing method using heat and pressure, a sealing method using ultrasonic waves, etc. may also be applied to the inner layer 301 and the outer layer 303.

For example, the inner layer 301 and the outer layer 303 of the gas discharge pipe 300 may be made of one or more materials selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber. For example, a polyolefin-based resin such as polypropylene (PP) or polyethylene (PE) may be mainly used. Polypropylene (PP) has excellent mechanical properties such as tensile strength, rigidity, surface hardness, wear resistance, and heat resistance, and excellent chemical properties such as corrosion resistance, and thus may be mainly used for manufacturing the inner layer 301 or the outer layer 303. Furthermore, the inner layer 301 and the outer layer 303 may also be made of cast polypropylene, acid modified polypropylene or polypropylene-butylene-ethylene terpolymer. Here, the acid modified polypropylene may be maleic anhydride polypropylene (MAH PP).

The transmission layer 302 may be disposed between the inner layer 301 and the outer layer 303. Therefore, the gas discharge pipe 300 may have a configuration including the inner layer 301, the transmission layer 302, and the outer layer 303 in this order from the inside to the outside.

The transmission layer 302 may have high gas permeability. The inner layer 301 and the outer layer 303 may have gas permeability, and the transmission layer 302 may have higher gas permeability than the inner layer 301 and the outer layer 303. For example, the transmission layer 302 may contain a fluorine-based resin with excellent gas permeability. For example, the transmission layer 302 may be made of polytetrafluoroethylene (PTFE).

Since the gas discharge pipe 300 includes the transmission layer 302, gas can be efficiently discharged through permeation.

As an example of a configuration of preventing the electrolyte solution inside the pouch 200 from leaking to the outside, the gas discharge pipe 300 according to the first embodiment of the present disclosure may include a sealing portion 310.

The gas discharge pipe 300 may be disposed such that the gas discharge pipe 300 extends from the inside of the pouch 200 to the outside. Here, the sealing portion 310 may protrude to the outside of the pouch 200. If the sealing portion 310 is disposed inside the pouch 200, when gas is discharged to the outside of the pouch 200, the gas has to be transmitted through both the surface of the gas discharge pipe 300 and the surface of the pouch 200. Therefore, the path through which the gas is discharged to the outside of the pouch 200 may be lengthened. That is, since the sealing portion 310 is disposed outside the pouch 200, the gas may be efficiently discharged to the outside of the pouch 200 through the surface of the gas discharge pipe 300.

The surface of the sealing portion 310 may also be composed of the inner layer 301, the transmission layer 302, and the outer layer 303, and the sealing portion 310 may be sealed by sealing the inner layers 301 which face each other. As described above, the inner layers 301 are sealed to each other by techniques, such as heat and pressure sealing. That is, the inner layers 301 facing each other may adhere to each other through sealing so that the sealing portion 310 of the gas discharge pipe 300 may be sealed.

The area of the sealing portion 310 may be determined in consideration of, for example, the gas discharge performance of the pouch cell 10, and the direction in which venting occurs. For example, if the amount of gas generated inside the pouch 200 is greater than the amount of gas discharged through the gas discharge pipe 300, the sealing portion 310 may be opened to induce venting. Here, the strength of the seal between the inner layers 301 may be determined by adjusting the area of the sealing portion 310, and the sealing strength of the sealing portion 310 may be set to be weaker than the sealing strength of the pouch 200. Therefore, if necessary, venting can be induced through the sealing portion 310 of the gas discharge pipe 300.

When the direction in which venting occurs through the sealing portion 310 is predicted in this manner, even if the venting of the pouch cell 10 progresses, it is easy to prepare for this. That is, it is easy to manage the pouch cell 10 or a battery module including the plurality of pouch cells 10, and the stability can be improved.

The gas discharge pipe 300 of the pouch cell 10 according to the first embodiment of the present disclosure may further include a passage portion 320.

The passage portion 320 of the gas discharge pipe 300 may have substantially a pipe shape having a space therein, through which gas can pass. Also, the passage portion 320 of the gas discharge pipe 300 may be disposed to extend from the sealing portion 310 to the inside of the pouch 200. Therefore, the passage portion 320 may form a space communicating with the inside of the pouch 200, through which gas can move. The gas inside the pouch 200 moves to the space formed in this way, and the moved gas may be transmitted through the surface of the gas discharge pipe 300 and may be discharged to the outside of the pouch 200.

The surface of the passage portion 320 may also be composed of the inner layer 301, the transmission layer 302, and the outer layer 303, and the outer layer 303 of the passage portion 320 may be sealed with the pouch 200 by sealing. As described above, the outer layer 303 may have sealing property based on heat and pressure. Also, the innermost layer of the pouch 200 may also be sealed by techniques such as heat and pressure. Due to the sealing of the passage portion 320 and the pouch 200, for example, electrolyte solution leakage into the space between the gas discharge pipe 300 and the pouch 200 can be prevented.

Meanwhile, the gas discharge pipe 300 of the pouch cell 10 according to the first embodiment of the present disclosure may be used as a passage through which the electrolyte solution is injected in the pouch cell manufacturing process.

In this regard, the pouch cell manufacturing process may include a process of injecting the electrolyte solution into the pouch 200 so that the electrode assembly 100 is impregnated with the electrolyte solution. Conventionally, since the sealing portion of the pouch 200 was stained with the electrolyte solution, there has been a problem in that the sealing quality has been deteriorated. However, when the electrolyte solution is injected into the pouch 200 through the gas discharge pipe 300 as in the present disclosure, most of the sealing portion of the pouch 200 except for the portion of the gas discharge pipe 300 can be sealed before the electrolyte solution is injected. Therefore, most of the sealing portion of the pouch 200 is not stained with the electrolyte solution, and the sealing quality can be improved.

The gas discharge pipe 300 of the pouch cell 10 according to the first embodiment of the present disclosure can not only be used as an electrolyte solution injection port during the pouch cell manufacturing process, but can also be used for discharging the gas generated during charging/discharging in the pouch cell 10 as a finished product. The gas discharge pipe 300 used in the pouch cell manufacturing process will be described in detail in a third embodiment.

Regarding the position of the gas discharge pipe 300, the gas discharge pipe 300 may be arranged to be spaced apart from the electrode lead 400. That is, the gas discharge pipe 300 may be disposed in a state where an interval is present between the gas discharge pipe 300 and the electrode lead 400. The electrode lead 400 may be electrically connected to the electrode assembly 100 and may extend to the outside of the pouch 200. For example, the electrode lead 400 may be disposed approximately at the center in the width-wise direction of the pouch 200, and the gas discharge pipe 300 may be eccentrically disposed on one side in the width-wise direction of the pouch 200. Here, the width-wise direction of the pouch 200 may be referred to as a vertical direction on the basis of FIG. 2.

When the gas discharge pipe 300 is arranged in a state where an interval is present between the gas discharge pipe 300 and the electrode lead 400, gas movement or flow to the outside of the pouch 200 is relatively less disturbed by the electrode lead 400, and thus, the gas can be efficiently discharged to the outside of the pouch 200.

The finished product of the pouch cell 10 according to the first embodiment of the present disclosure includes the gas discharge pipe 300. The gas discharge pipe 300 can also be used for efficient electrolyte solution injection in the manufacturing process, and the internal gas generated during charging/discharging can be discharged to the outside through the gas discharge pipe 300. Therefore, through this, it is possible to delay or prevent the occurrence of venting, etc. thereby improving the stability of the pouch cell 10.

### Second embodiment

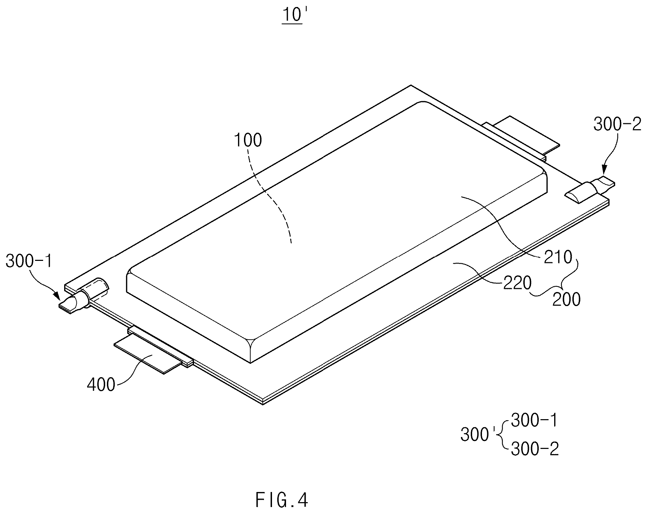

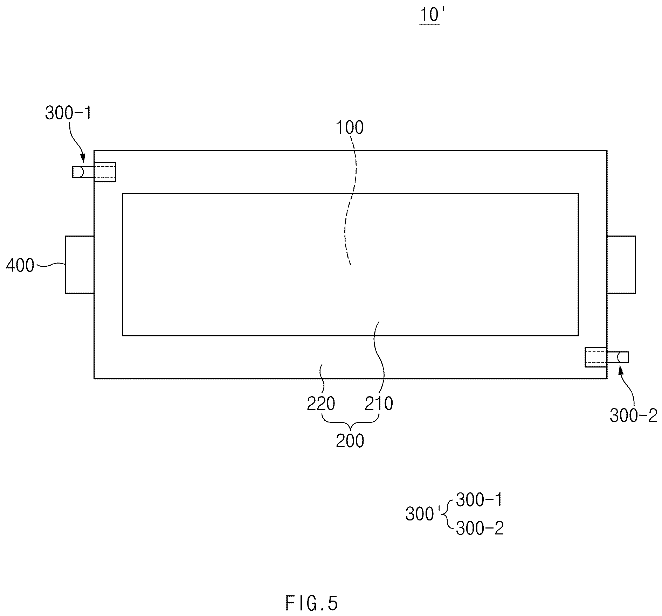

FIG. 4 is a perspective view schematically illustrating a pouch cell 10' according to a second embodiment of the present disclosure, and FIG. 5 is a plan view schematically illustrating the pouch cell 10' according to the second embodiment of the present disclosure.

Hereinafter, a detailed description on the same configuration as that of the pouch cell 10 according to the first embodiment of the present disclosure will be omitted, and differences will be mainly described.

The shape of a gas discharge pipe 300' in the pouch cell 10' according to the second embodiment of the present disclosure may be different from that in the pouch cell 10 according to the first embodiment of the present disclosure.

As an example of a configuration for efficient gas discharge, the gas discharge pipe 300' of the pouch cell 10' according to the second embodiment of the present disclosure may include a first gas discharge pipe 300-1 and a second gas discharge pipe 300-2.

The first gas discharge pipe 300-1 and the second gas discharge pipe 300-2 may have substantially the same shapes, and may be configured with the same layer structures. That is, each of the first gas discharge pipe 300-1 and the second gas discharge pipe 300-2 may have a three-layer structure of the inner layer 301, the transmission layer 302, and the outer layer 303, in which one end can be sealed. The shape of each of the first gas discharge pipe 300-1 and the second gas discharge pipe 300-2 may be similar to the shape of the gas discharge pipe 300 described in the first embodiment of the present disclosure for the pouch cell 10, and thus detailed descriptions thereof will be omitted.

Referring to FIGS. 4 and 5, the first gas discharge pipe 300-1 may be disposed at one end in the longitudinal direction of the pouch 200, and the second gas discharge pipe 300-2 may be disposed at the other end in the longitudinal direction of the pouch 200. Here, the longitudinal direction may mean the horizontal direction on the basis of FIG. 5.

In the pouch cell 10', the gas inside the pouch 200 is discharged through two places, i.e., the first gas discharge pipe 300-1 and the second gas discharge pipe 300-2, and thus the gas removal performance can be improved. Also, since the first gas discharge pipe 300-1 is disposed at one end, and the second gas discharge pipe 300-2 is disposed at the other end on the opposite side, gas can be more efficiently discharged.

For example, the first gas discharge pipe 300-1 may be eccentrically disposed on one side in the width-wise direction of the pouch 200, and the second gas discharge pipe 300-2 may be eccentrically disposed on the other side in the width-wise direction of the pouch 200. Here, the width-wise direction may be referred to as the vertical direction on the basis of FIG. 5.

That is, the first gas discharge pipe 300-1 and the second gas discharge pipe 300-2 may be arranged at substantially point-symmetric positions around the center of the pouch 200. Therefore, gas can be more efficiently discharged from the pouch cell 10'.

Meanwhile, the first gas discharge pipe 300-1 of the gas discharge pipe 300 according to the second embodiment of the present disclosure may be used as a passage through which the electrolyte solution is injected in the pouch cell manufacturing process. Also, the second gas discharge pipe 300-2 of the gas discharge pipe 300 may be used as a passage through which gas inside the pouch 200 is removed when the electrolyte solution is injected through the first gas discharge pipe 300-1 in the pouch cell manufacturing process. That is, the second gas discharge pipe 300-2 forms a vacuum inside the pouch 200, so that the electrode assembly 100 can be evenly impregnated with the electrolyte solution injected through the first gas discharge pipe 300-1. The first gas discharge pipe 300-1 and the second gas discharge pipe 300-2 are arranged at substantially point-symmetric positions around the center of the pouch 200. Therefore, when gas removal from the inside of the pouch 200 and electrolyte solution injection are simultaneously carried out in the pouch cell manufacturing process, mutual inference can be reduced, and the process efficiency can be improved.

### Third Embodiment

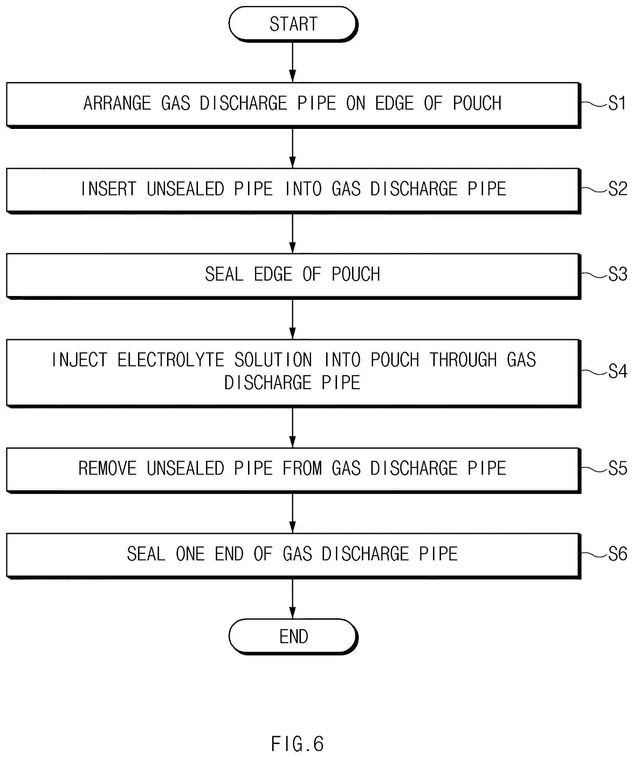

FIG. 6 is a flowchart schematically illustrating a pouch cell manufacturing method according to the third embodiment of the present disclosure.

The pouch cell manufacturing method according to the third embodiment of the present disclosure may include a step S1 of arranging the gas discharge pipe 300 on the edge of the pouch 200 within which the electrode assembly 100 is accommodated. Specifically, the gas discharge pipe 300 may be disposed on the terrace portion 220 of the pouch 200. Here, the gas discharge pipe 300 is used as a passage through which the electrolyte solution is injected, and thus may have substantially a pipe shape.

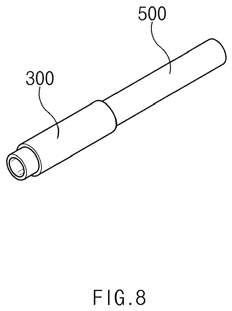

Next, a step S2 of inserting an unsealed pipe 500 into the gas discharge pipe 300 disposed on the terrace portion 220 of the pouch 200 may be performed (see, *e.g.,* FIG. 8). Here, the unsealed pipe 500 may include a fluorine-based resin which lacks the ability to form a seal. Therefore, the unsealed pipe 500 may prevent the gas discharge pipe 300 from being sealed together with the edge of the pouch 200 when the edge is sealed. The unsealed pipe 500 may have a pipe shape similar to that of the gas discharge pipe 300, and may have a smaller diameter than the gas discharge pipe 300 so as to be easily inserted into the gas discharge pipe 300.

After the unsealed pipe 500 is inserted and disposed inside the gas discharge pipe 300, a step S3 of sealing the edge of the pouch 200 may be performed. Here, the outer layer 303 of the gas discharge pipe 300 and the pouch 200, which have sealing property, may be sealed through sealing. In contrast, since the unsealed pipe 500 having no sealing property is disposed inside the gas discharge pipe 300, the inside of the gas discharge pipe 300 may not be sealed by sealing even in the edge sealing step. This is because the unsealed pipe 500 is inserted into the gas discharge pipe 300, and in this state, the inner layers 301 of the gas discharge pipe 300, which have sealing property, do not come in contact with each other due to the unsealed pipe 500.

After the sealing of the pouch 200 is completed in the step S3, a step S4 of injecting an electrolyte solution into the pouch 200 through the gas discharge pipe 300 may be performed. That is, in the pouch cell manufacturing method according to the third embodiment of the present disclosure, since the electrolyte solution injection step is performed after the pouch sealing step, the edge of the pouch 200 is sealed before the pouch 200 is stained with the electrolyte solution, so that sealing quality can be improved.

Meanwhile, the gas discharge pipe 300 may include the first gas discharge pipe 300-1 arranged at one end in the longitudinal direction of the pouch 200 and the second gas discharge pipe 300-2 arranged at the other end in the longitudinal direction of the pouch 200. Here, the electrolyte solution may be injected into the pouch 200 through the first gas discharge pipe 300-1, and gas inside the pouch 200 may be removed through the second gas discharge pipe 300-2. Therefore, in the pouch cell manufacturing method according to the present embodiment, the electrode assembly 100 inside the pouch 200 is more evenly impregnated with the electrolyte solution, so that the impregnation property of the electrolyte solution can be improved.

In the electrolyte solution injection step S4, after the gas inside the pouch 200 is removed through the second gas discharge pipe 300-2, the electrolyte solution may be injected through the first gas discharge pipe 300-1. In this case, since the inside of the pouch 200 is in a substantially vacuum state, the electrode assembly 100 can be evenly impregnated with the electrolyte solution.

Also, the gas may be removed through the second gas discharge pipe 300-2, simultaneously with the injection of the electrolyte solution through the first gas discharge pipe 300-1. In this case, since the time consumed in the process is shortened, the process efficiency can be improved. Here, as the distance between the first gas discharge pipe 300-1 and the second gas discharge pipe 300-2 increases, the interference between gas removal and electrolyte solution injection may decrease.

After the electrolyte solution is injected into the pouch 200, a step S5 of removing the unsealed pipe 500 from the gas discharge pipe 300 may be performed. Since the unsealed pipe 500 is stained with the electrolyte solution during the electrolyte solution injection process, the inner layer 301 of the gas discharge pipe 300, which has sealing property, may be stained with a relatively small amount of electrolyte solution.

After the unsealed pipe 500 is removed, a step S6 of sealing one end of the gas discharge pipe 300 may be performed. The inner layer 301 of the gas discharge pipe 300, which has sealing property, is stained with a relatively small amount of electrolyte solution because the electrolyte solution is blocked by the unsealed pipe 500. Thus, the sealing quality of the gas discharge pipe 300 can be improved. Here, the inner layers 301 facing each other at one end of the gas discharge pipe 300 may be sealed with each other by heat and pressure. Due to sealing, one end of the gas discharge pipe 300 may be sealed, and the electrolyte solution inside the pouch 200 is prevented from leaking to the outside. Here, the sealing area of the gas discharge pipe 300 may be determined in consideration of the gas discharge performance, the venting prevention pressure, and the like, of the finished pouch cell 10.

In the pouch cell manufacturing method according to the third embodiment of the present disclosure, the pouch 200 is sealed before the process of injecting the electrolyte solution into the pouch 200, that is, in a state where the pouch 200 is not stained with the electrolyte solution. This non-staining improves the sealing quality. Therefore, venting, and the like, can be prevented and the stability of the pouch cell 10 can be improved. Also, since the electrolyte solution is injected in a state where gas inside the pouch 200 is removed, the impregnation property of the electrolyte solution can be improved. That is, it is possible to improve the performance and quality of the pouch cell 10 as a finished product.

### Fourth embodiment

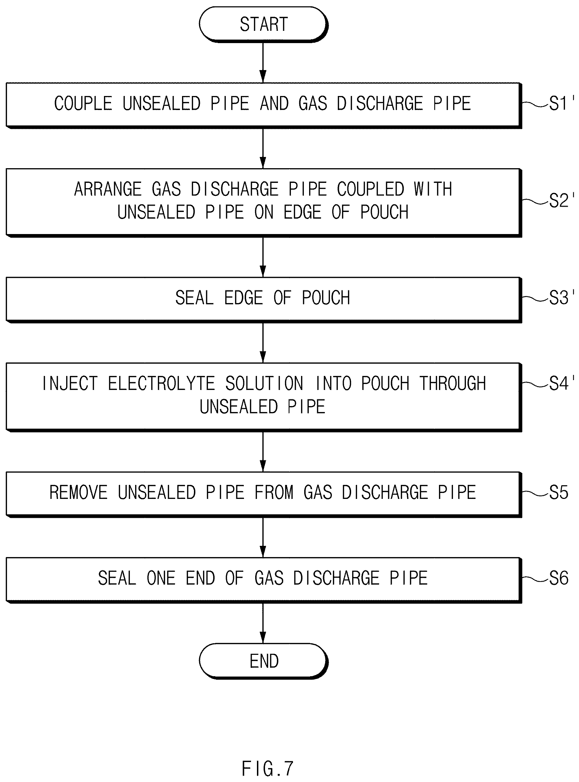

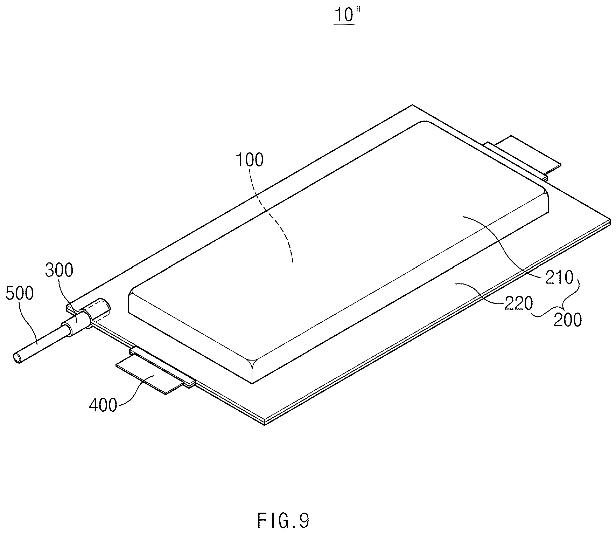

FIG. 7 is a flowchart schematically illustrating a pouch cell manufacturing method according to a fourth embodiment of the present disclosure. FIG. 8 is a perspective view schematically illustrating a state where the unsealed pipe 500 and the gas discharge pipe 300 are coupled in the pouch cell manufacturing method according to the fourth embodiment of the present disclosure, and FIG. 9 is a perspective view schematically illustrating a state where the gas discharge pipe 300 coupled with the unsealed pipe 500 is inserted into the pouch 200 in the pouch cell manufacturing method according to the fourth embodiment of the present disclosure.

Hereinafter, the description on the same steps as the steps in the pouch cell manufacturing method according to the third embodiment of the present disclosure will be omitted, and differences will be mainly described.

Referring to FIG. 7, the pouch cell manufacturing method according to the fourth embodiment of the present disclosure may include a step S1' of coupling the unsealed pipe 500 and the gas discharge pipe 300. That is, in the pouch cell manufacturing method according to the fourth embodiment of the present disclosure, the unsealed pipe 500 and the gas discharge pipe 300 may be coupled in advance, before the gas discharge pipe 300 is disposed inside the pouch 200. This is different from the pouch cell manufacturing method according to the third embodiment of the present disclosure, in which the unsealed pipe 500 is inserted after the gas discharge pipe 300 is disposed inside the pouch 200.

Referring to FIG. 8, in the step S1', the unsealed pipe 500 and the gas discharge pipe 300 may be coupled such that the outer peripheral surface of the unsealed pipe 500 and the inner peripheral surface of the gas discharge pipe 300 face each other. Here, the unsealed pipe 500 is used as a passage through which the electrolyte solution is injected, and thus may have substantially a pipe shape. Also, for efficient electrolyte solution injection, the length of the unsealed pipe 500 may be longer than that of the gas discharge pipe 300.

As an example of a method of coupling the gas discharge pipe 300 and the unsealed pipe 500, the unsealed pipe 500 may be inserted in the gas discharge pipe 300. Also, in another example, after a sheet having the same layer structure as the layer structure of the gas discharge pipe 300 may be wrapped around the outer peripheral surface of the unsealed pipe 500, both ends of the sheet may be connected to form the gas discharge pipe 300.

Next, a step S2' of arranging the gas discharge pipe 300 coupled with the unsealed pipe 500 on the edge of the pouch 200 may be performed. Specifically, the gas discharge pipe 300 coupled with the unsealed pipe 500 may be disposed on the terrace portion 220 of the pouch 200.

The diameter of the gas discharge pipe 300 may vary depending on, for example, the gas discharge performance required in the pouch cell 10 or the electrolyte solution injection speed. When the diameter of the gas discharge pipe 300 is relatively small, it may be difficult to efficiently perform the process of inserting the unsealed pipe 500 into the gas discharge pipe 300 disposed inside the pouch 200. In this regard, in the pouch cell manufacturing method according to the fourth embodiment of the present disclosure, before the gas discharge pipe 300 is disposed inside the pouch 200, coupling between the unsealed pipe 500 and the gas discharge pipe 300 may be performed. Therefore, the gas discharge pipe 300 and the unsealed pipe 500 can be relatively easily coupled. This can improve the efficiency of the pouch cell manufacturing process.

After the gas discharge pipe 300 coupled with the unsealed pipe 500 is disposed inside the pouch 200, a step S3' of sealing the edge of the pouch 200 may be performed. Here, since the unsealed pipe 500 having no sealing property is disposed inside the gas discharge pipe 300, the inside of the gas discharge pipe 300 may not be sealed by sealing even in the step S3' of sealing the edge of the pouch 200.

Next, a step S4' of injecting an electrolyte solution into the pouch 200 through the unsealed pipe 500 may be performed. The process of removing the unsealed pipe 500 and sealing one end of the gas discharge pipe 300 after the injection of the electrolyte solution into the pouch 200 may be the same as in the third embodiment of the present disclosure. Also, similarly to in the third embodiment, in the fourth embodiment, since the electrolyte solution injection process is performed after the pouch sealing process, the edge of the pouch 200 is sealed before the pouch 200 is stained with the electrolyte solution, so that sealing quality can be improved.

Although the present disclosure has been described by limited embodiments and drawings, the present disclosure is not limited thereto, and various implementations can be made by the person with ordinary skill in the technical field to which the present disclosure pertains within the equivalent scope of the technical idea of the present disclosure and the claims to be described below.

### [Description of the Reference Numerals]

10, 10', 10'': pouch cell
100: electrode assembly
200: pouch
210: cup portion
220: terrace portion
300, 300': gas discharge pipe
300-1: first gas discharge pipe
300-2: second gas discharge pipe
301: inner layer
302: transmission layer
303: outer layer
310: sealing portion
320: passage portion
400: electrode lead
500: unsealed pipe

## Claims

1. A pouch cell comprising:
an electrode assembly;
a pouch within which the electrode assembly is accommodated; and
a gas discharge pipe that is disposed such that the gas discharge pipe extends from inside of the pouch to outside,
wherein gas inside the pouch is transmitted through the gas discharge pipe and is discharged to the outside of the pouch.

2. The pouch cell according to claim 1, wherein the gas discharge pipe includes:
an inner layer and an outer layer which have sealing property based on heat; and
a transmission layer arranged between the inner layer and the outer layer, and having higher gas permeability than the inner layer and the outer layer.

3. The pouch cell according to claim 2, wherein the inner layer and the outer layer contain a polyolefin-based resin, and
the transmission layer contains polytetrafluoroethylene (PTFE).

4. The pouch cell according to claim 1, wherein the gas discharge pipe further includes a sealing portion that protrudes to the outside of the pouch, and has inner layers sealed by sealing.

5. The pouch cell according to claim 4, wherein the gas discharge pipe further includes a passage portion that extends from the sealing portion to the inside of the pouch, and forms a space communicating with the inside of the pouch, through which gas is movable.

6. The pouch cell according to claim 5, wherein an outer layer of the passage portion is sealed with the pouch by sealing.

7. The pouch cell according to claim 1, further comprising:
an electrode lead electrically connected to the electrode assembly and extending to the outside of the pouch,
wherein the gas discharge pipe is disposed in a state where an interval is present between the gas discharge pipe and the electrode lead.

8. The pouch cell according to claim 1, wherein the pouch includes:
a cup portion having a space therein where the electrode assembly is disposed; and
a terrace portion arranged on an edge of the cup portion and sealed,
wherein the gas discharge pipe is disposed while being inserted in the terrace portion.

9. The pouch cell according to claim 1, wherein the gas discharge pipe includes:
a first gas discharge pipe disposed at one end in a longitudinal direction of the pouch; and
a second gas discharge pipe disposed at the other end in the longitudinal direction of the pouch.

10. The pouch cell according to claim 9, wherein the first gas discharge pipe is eccentrically disposed on one side in a width-wise direction of the pouch, and
the second gas discharge pipe is eccentrically disposed on the other side in the width-wise direction of the pouch.

11. A method of manufacturing a pouch cell, the method comprising:
(S1) arranging a gas discharge pipe on an edge of a pouch within which an electrode assembly is accommodated;
(S2) inserting an unsealed pipe configured to prevent sealing of the gas discharge pipe, into the gas discharge pipe;
(S3) sealing the edge of the pouch; and
(S4) injecting an electrolyte solution into the pouch through the gas discharge pipe.

12. The method according to claim 11, wherein the gas discharge pipe includes:
a first gas discharge pipe disposed at one end in a longitudinal direction of the pouch; and
a second gas discharge pipe disposed at the other end in the longitudinal direction of the pouch,
wherein in the step (S4) of the injecting of the electrolyte solution,
the electrolyte solution is injected into the pouch through the first gas discharge pipe, and
gas inside the pouch is removed through the second gas discharge pipe.

13. The method according to claim 11, further comprising:
(S5) removing the unsealed pipe after the electrolyte solution is injected into the pouch; and
(S6) sealing one end of the gas discharge pipe.

14. The method according to claim 11, wherein the unsealed pipe contains a fluorine-based resin having no sealing property.

15. A method of manufacturing a pouch cell, the method comprising:
(S1') coupling an unsealed pipe and a gas discharge pipe such that an outer peripheral surface of the unsealed pipe faces an inner peripheral surface of the gas discharge pipe;
(S2') arranging the gas discharge pipe coupled with the unsealed pipe, on an edge of a pouch within which an electrode assembly is accommodated;
(S3') sealing the edge of the pouch; and
(S4') injecting an electrolyte solution into the pouch through the unsealed pipe.

16. The method according to claim 15, further comprising:
(S5') removing the unsealed pipe after the electrolyte solution is injected into the pouch; and
(S6') sealing one end of the gas discharge pipe.

17. The method according to claim 15, wherein the unsealed pipe contains a fluorine-based resin having no sealing property.

18. The method according to claim 16, wherein a sealing strength of the sealed one end of the gas discharge pipe is set to be weaker than a sealing strength of the edge of the pouch.
